# FASCICULE DE BREVET EUROPEEN

(11) **EP 0 783 185 B1**
(45) Date de publication et mention de la délivrance du brevet: **12.04.2000**
(21) Numéro de dépôt: 96810905.8
(22) Date de dépôt: 24.12.1996
(51) Int. Cl.: H01L 41/09, H02N 2/10

(54) **Moteur piézoélectrique à onde progressive**
Piezoelektrischer Wanderwellenmotor
Piezoelectric progressive wave motor

(30) Priorité: 04.01.1996 FR 9600061
(43) Date de publication de la demande: 09.07.1997
(73) Titulaire: FIGEST B.V., 1066 GH Amsterdam (NL)
(72) Inventeur: Gonnard, Paul, 69100 Villeurbanne (FR); Petit, Lionel, 69009 Lyon (FR)
(74) Mandataire: Meylan, Robert Maurice

(56) Documents cités:
- EP-A- 0 669 662
- WO-A-95/05682
- US-A- 5 363 006

## Description

L'invention a pour objet un moteur piézoélectrique à onde progressive comprenant au moins un stator, deux groupes d'éléments piézoélectriques constitués de bâtonnets de céramique polarisés indépendants les uns des autres, disposés perpendiculairement au stator, c'est-à-dire parallèlement à l'axe du moteur, répartis sur le stator, en contact permanent avec le stator et excités par un courant alternatif avec un déphasage de π/2 entre les groupes de manière à engendrer à la surface du stator une déformation en forme d'onde progressive, et au moins un rotor en forme de disque maintenu élastiquement en contact avec le stator pour son entraînement en rotation par l'onde progressive engendrée sur le stator.

Un tel moteur piézoélectrique est connu du document WO 95/05 682.

Ce moteur comprend deux rotors en forme de disques calés sur un arbre et un système d'entraînement à double stator monté entre les rotors et comprenant un premier stator annulaire pour l'entraînement d'un des rotors et un deuxième stator annulaire pour l'entraînement du deuxième rotor. Les stators sont reliés entre eux par des bâtonnets piézoélectriques à double polarisation, constitués par deux bâtonnets piézoélectriques collés en opposition de polarité par une de leurs extrémités ou par un bâtonnet unique polarisé dans les deux directions à partir d'une électrode unique, de forme annulaire disposée en son milieu. Ces bâtonnets sont excités par un courant alternatif et organisés en deux groupes, l'un vibrant en quadrature de phase avec l'autre afin de produire les deux ondes stationnaires nécessaires à la constitution d'une onde progressive qui, transmise aux stators, entraîne les rotors en rotation.

Une dispersion de fréquence de résonance des bâtonnets de quelques hertz, due à une différence de longueur des bâtonnets, entraîne une dispersion de phase importante entre les ondes engendrées. Or, tous les bâtonnets d'un groupe doivent vibrer en phase pour participer de concert à l'établissement de l'onde progressive.

Les solutions connues à ce problème sont d'appairer les bâtonnets, ce qui est coûteux et inadapté à la grande série ou de les tronçonner ou ajuster avec une grande précision, ce qui entraîne également un surcoût. Ces deux moyens ont, de plus, leur limite dans la précision d'usinage.

Une autre solution serait de comprimer les bâtonnets. On a, en effet, constaté que leur compression permet de limiter considérablement la dispersion des fréquences de résonance.

Dans le moteur selon le document WO 95/05 682, la force appliquée sur les bâtonnets est cependant liée directement à celle appliquée au rotor. Or, la force qui doit être appliquée entre rotor et stator est environ dix fois moins importante que celle nécessaire pour comprimer efficacement les bâtonnets. Il faut donc compromettre sur ces deux forces qui ont des exigences sensiblement différentes.

Des moyens de précontrainte des éléments piézoélectriques sont utilisés dans les moteurs piézoélectriques décrits dans les documents FR 2 715 780 et EP 552 754 A1 dans un but différent, ce but étant que les éléments piézoélectriques soient uniquement utilisés en compression, ces éléments étant plus résistants à la compression qu'à la traction.

Ces moyens de précontrainte ne sont cependant pas applicables de manière simple au moteur du document WO 95/05 682.

Aussi, le but de l'invention est de modifier le moteur selon le document WO 95/05 682 de manière à ce que les bâtonnets piézoélectriques puissent être comprimés sous une force suffisamment importante pour limiter la dispersion des fréquences de résonance sans pour autant que le rotor soit appuyé trop fortement contre le stator.

Ce but est atteint par le moteur piézoélectrique selon l'invention, caractérisé en ce que le stator est en forme de roue constituée d'un anneau périphérique sur lequel sont répartis les éléments piézoélectriques, d'un moyeu central et de bras de liaison répartis régulièrement entre l'anneau périphérique et le moyeu et destinés à transmettre une pression axiale exercée au moyeu à l'anneau et ainsi aux éléments piézoélectriques de manière à limiter la dispersion des fréquences de résonance des éléments piézoélectriques, ces bras permettant par ailleurs la circulation sur l'anneau périphérique d'une onde progressive, la pression axiale appliquée au moyen de moyens de pression au moyeu pour comprimer les éléments piézoélectiques étant indépendante des moyens maintenant le rotor élastiquement en contact contre le stator.

Le stator ainsi réalisé permet de comprimer les bâtonnets sous une force indépendante de celle appliquée au rotor. Il permet donc de les comprimer avec une force suffisamment importante pour limiter la dispersion des fréquences de résonance.

Un moteur réalisé avec le stator selon l'invention possède un facteur de qualité, aussi appelé facteur de surtension, cinq fois supérieur à celui d'un moteur réalisé selon l'art antérieur.

De plus, les pièces du moteur, en particulier le stator, sont simples à réaliser industriellement.

Le stator peut être simplifié à l'extrême, pour une plus grande facilité de fabrication lors de l'industrialisation, en réalisant les trous par perçage et découpage, les rayons d'articulation étant alors formés par la matière entre les trous.

Le dessin annexé représente une forme d'exécution de l'invention.

La figure 1 représente le stator selon l'invention selon trois vues différentes : une vue de dessus et deux coupes transversales.

La figure 2 représente une vue en coupe axiale d'une forme d'exécution du moteur piézoélectrique selon l'invention.

La figure 3 représente une variante d'exécution du stator de la figure 1.

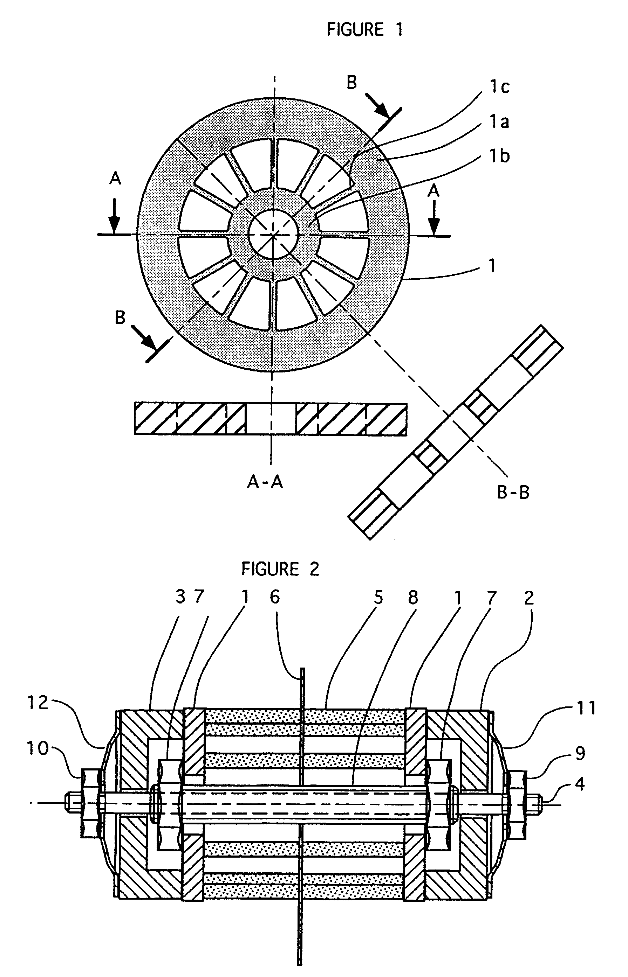

Le stator 1 représenté en figure 1 est constitué d'un anneau périphérique 1a et d'un moyeu 1b reliés l'un à l'autre par des bras radiaux 1c répartis uniformément sur toute la périphérie. Ces bras lc ont une largeur qui n'est qu'une fraction de leur épaisseur. Dans l'exemple représenté, le rapport largeur/épaisseur est d'environ 1/5. Le stator est en une seule pièce.

Sollicités dans l'axe de leur plus grande épaisseur, les rayons 1c du stator 1 peuvent transmettre une contrainte appliquée au moyeu 1b à l'anneau périphérique 1a. Les rayons ayant toute liberté d'être torsadés dans leur plus petite épaisseur, ils permettent la propagation d'une onde progressive de flexion dans l'anneau périphérique et ne nuisent donc pas aux oscillations de la surface de contact formée par l'anneau 1a.

Les bras 1c pourraient être formés par simple perçage. Dans ce cas, les trous séparant les bras sont ronds et ce n'est que dans leur zone médiane que les bras présentent une largeur qui n'est qu'une fraction de leur épaisseur.

Le moteur représenté en partie en figure 2 comprend deux rotors 2, 3 calés sur un arbre 4 et un système d'entraînement à double stator monté entre les rotors 2, 3 et comprenant deux stators 1 tel que celui représenté en figure 1, l'un étant destiné à l'entraînement du rotor 2 et l'autre à l'entraînement du rotor 3. Les anneaux périphériques des stators 1 sont reliés entre eux par deux groupes de six bâtonnets piézoélectriques 5 à double polarisation, comme dans le moteur selon le document WO 95/05682. Ces bâtonnets sont polarisés dans les deux directions à partir d'une électrode unique 6 de forme annulaire disposée en leur milieu et disposés parallèlement à l'arbre 4 du moteur. Les bâtonnets 5 sont comprimés entre les stators 1 au moyen d'écrous 7 montés sur un tube fileté 8 traversant les moyeux des stators, ces écrous 7 pressant les stators 1 en direction l'un de l'autre et donc comprimant les bâtonnets piézoélectriques 5. Le tube fileté 8 est traversé coaxialement par l'arbre 4 des rotors 2, 3. Le tube 8 et l'arbre 4 sont libres en rotation l'un par rapport à l'autre. Les rotors 2, 3 sont respectivement appuyés élastiquement contre leur stator 1 au moyen d'un écrou 9, 10 vissé sur l'arbre 4 et appuyant une rondelle élastique 11, 12 contre les rotors 2, 3.

Par des moyens relativement simples, la force destinée à comprimer les éléments piézoélectriques et celle destinée à appuyer le rotor contre le stator peuvent ainsi être appliquées indépendamment l'une de l'autre.

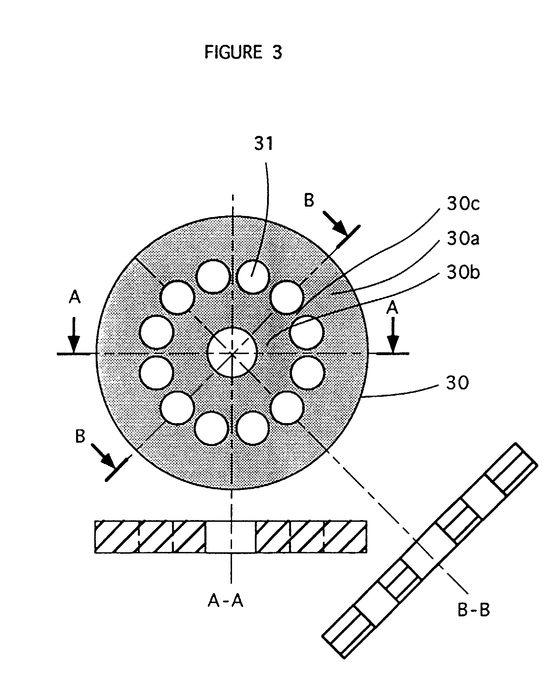

Selon une variante d'exécution du stator, telle que représentée à la figure 3, les bras radiaux 30c reliant le moyeu 30b à l'anneau 30a sont formés par la matière subsistant entre des trous circulaires 31 formés par perçage. Les bras 30c sont sensiblement plus courts que les bras lc de la figure 1, ce qui a pour effet avantageux d'élever leur fréquence de résonance bien au delà des fréquences de travail.

La forme d'exécution décrite dans les figures 1, 2 et 3 n'est pas limitative de l'étendue de l'invention telle que caractérisée par les revendications.

Les moyens d'application de force sur le rotor et les bâtonnets peuvent être différents de ceux représentés, ceux-ci ayant été simplifiés au maximum pour raison de commodité d'explication.

## Revendications

1. Moteur piézoélectrique à onde progressive comprenant au moins un stator (1), deux groupes d'éléments piézoélectriques constitués de bâtonnets de céramique (5) polarisés indépendants les uns des autres, disposés perpendiculairement au stator (1), c'est-à-dire parallèlement à l'axe du moteur, répartis sur le stator (1), en contact permanent avec le stator (1) et excités par un courant alternatif avec un déphasage de π/2 entre les groupes de manière à engendrer à la surface du stator (1) une déformation en forme d'onde progressive, et au moins un rotor (2, 3) en forme de disque maintenu élastiquement en contact avec le stator (1) pour son entraînement en rotation par l'onde progressive engendrée sur le stator, caractérisé en ce que le stator (1) est en forme de roue constituée d'un anneau périphérique (1a) sur lequel sont répartis les éléments piézoélectriques, d'un moyeu central et de bras de liaison (1c) répartis régulièrement entre l'anneau périphérique et le moyeu (1b) et destinés à transmettre à l'anneau (1a) une pression axiale exercée au moyeu (1b) et ainsi aux éléments piézoélectriques (5), de manière à limiter la dispersion de fréquence de résonance des éléments piézoélectriques (5), ces bras (1c) permettant par ailleurs la circulation sur l'anneau périphérique (1a) d'une onde progressive, la pression axiale appliquée au moyen de moyens de pression (7) au moyeu (1b) pour comprimer les éléments piézoélectiques étant indépendante des moyens (9, 10, 11, 12) maintenant le rotor (2, 3) élastiquement en contact contre le stator (1).

2. Moteur piézoélectrique selon la revendication 1, caractérisé en ce que les bras de liaison (1c) ont, au moins dans leur zone médiane, une largeur inférieure à leur épaisseur de manière à pouvoir transmettre une contrainte appliquée au moyeu (1b) à l'anneau périphérique (1a) et à permettre la propagation d'une onde progressive dans l'anneau périphérique (1a).

3. Moteur piézoélectrique selon la revendication 2, caractérisé en ce que lesdits bras (30c) sont formés par la matière subsistant entre des trous circulaires (31) répartis circulairement sur un disque.

4. Moteur piézoélectrique selon l'une des revendications 1 à 3, caractérisé en ce qu'un tube creux (8) traverse le moyeu (1b) axialement, que les moyens de pression (7) permettant l'application d'une pression axiale au moyeu (1b) en direction des bâtonnets (5) sont constitués par un élément (7) amovible solidaire de ce tube (8) et appuyant sur le moyeu (1b) et en ce que le rotor (2, 3) est calé sur un arbre (4) traversant le tube (8) axialement et libre en rotation par rapport à ce tube (8), les moyens (9, 10, 11, 12) maintenant le rotor élastiquement contre le stator (1) étant constitués par un élément (9, 10) amovible solidaire de l'arbre (4) et appuyant sur un élément élastique (11, 12) transmettant la pression au rotor (2, 3).

5. Moteur piézoélectrique selon la revendication (4), caractérisé en ce que les éléments amovibles (7, 9, 10) sont des écrous respectivement vissés sur le tube (8) et sur l'arbre du rotor (4).

## Patentansprüche

1. Piezoelektrischer Wanderwellenmotor mit wenigstens einem Ständer (1), mit zwei Gruppen von piezoelektrischen Elementen, die aus unabhängig voneinander polarisierten keramischen Stäben (5) bestehen, welche senkrecht zum Ständer (1), das heisst parallel zur Motorachse über den Ständer verteilt angeordnet sind, sich ständig in Kontakt mit dem Ständer befinden und durch einen Wechselstrom mit einer Phasenverschiebung von π/2 zwischen den Gruppen erregt werden, um an der Oberfläche des Ständers (1) eine Verformung in Form einer Wanderwelle zu erzeugen, und mit wenigstens einem Läufer (2, 3) in Form einer Scheibe, die elastisch in Kontakt mit dem Ständer (1) gehalten wird, um sie durch die auf dem Ständer erzeugte Wanderwelle in Drehung zu versetzen, dadurch gekennzeichnet, dass der Ständer (1) in Form eines Rades ausgebildet ist, das aus einem Umfangsring (1a), auf dem die piezoelektrischen Elemente verteilt sind, aus einer zentralen Nabe und aus regelmässig zwischen dem Umfangsring und der Nabe (1b) verteilten Verbindungsarmen (1c) besteht, welche dazu bestimmt sind, einen auf die Nabe (1b) und damit auf die piezoelektrischen Elemente (5) ausgeübten axialen Druck auf den Umfangsring (1a)zu übertragen, um die Streuung der Resonanzfrequenz der piezoelektrischen Elemente (5) zu begrenzen, wobei die Arme (1c) ausserdem den Umlauf einer Wanderwelle auf dem Umfangsring (la) erlauben, und dass der mit Hilfe von Druckmitteln auf die Nabe (1b) ausgeübte axiale Druck zum Komprimieren der piezoelektrischen Elemente unabhängig von den Mitteln (9, 10, 11, 12) ist, welche den Läufer elastisch in Kontakt mit dem Ständer halten.

2. Piezoelektrischer Motor nach Anspruch 1, dadurch gekennzeichnet, dass die Verbindungsarme (1c) wenigstens in ihrem mittleren Bereich eine Breite haben, die kleiner als ihre Dicke ist, um eine auf die Nabe (1b) ausgeübte Belastung auf den Umfangsring übertragen zu können und um die Fortpflanzung einer Wanderwelle im Umfangsring zu erlauben.

3. Piezoelektrischer Motor nach Anspruch 2, dadurch gekennzeichnet, dass die erwähnten Arme (30c) aus dem zwischen kreisförmig auf einer Scheibe verteilten kreisförmigen Löchern (31) stehengebliebenem Material gebildet sind.

4. Piezoelektrischer Motor nach einem der Ansprüche 1 bis 3, dadurch gekennzeichnet, dass die Nabe (1b) axial von einem hohlen Rohr (8) durchquert wird, dass die Druckmittel (7), welche einen axialen Druck auf die Nabe (1b) in Richtung der Stäbe (5) auszuüben erlauben, aus einem Element (7) bestehen, das abnehmbar fest an diesem Rohr (8) angebracht ist und gegen die Nabe (1b) drückt, dass der Läufer (2, 3) auf einer Welle (4) aufgekeilt ist, welche das Rohr (8) axial durchquert und frei in Bezug auf dieses Rohr drehbar ist, und dass die Mittel (9, 10, 11, 12), welche den Läufer elastisch gegen den Ständer gedrückt halten, aus einem Element (9, 10) bestehen, das abnehmbar fest an der Welle (4) angebracht ist und auf ein den Druck auf den Läufer (2, 3) übertragendes elastisches Element (11, 12) drückt.

5. Piezoelektrischer Motor nach Anspruch 4, dadurch gekennzeichnet, dass die abnehmbaren Elemente (7, 9, 10) Schraubenmuttern sind, welche auf das Rohr (8) bzw. auf die Läuferwelle (4) geschraubt sind.

## Claims

1. Traveling-wave piezoelectric motor comprising at least one stator (1), two groups of piezoelectric elements consisting of ceramic rods (5) polarized independently of one another, arranged perpendicularly to the stator (1), that is to say parallel to the axis of the motor, distributed over the stator (1), in permanent contact with the stator (1) and excited by an alternating current with a phase shift of π/2 between the groups so as to generate a deformation in the form of a traveling wave on the surface of the stator (1), and at least one rotor (2, 3) in the form of a disk retained elastically in contact with the stator (1) for the rotational driving thereof by the traveling wave generated on the stator, characterized in that the stator (1) is in the form of a wheel consisting of a peripheral annulus (1a) over which the piezoelectric elements are distributed, of a central hub and of linking arms (1c) distributed regularly between the peripheral annulus and the hub (1b) and intended to transmit to the annulus (1a) an axial pressure exerted on the hub (1b) and thus to the piezoelectric elements (5), so as to limit the spread in the resonant frequency of the piezoelectric elements (5), these arms (1c) furthermore allowing the circulation over the peripheral annulus (1a) of a traveling wave, the axial pressure applied by means of pressure means (7) to the hub (1b)in order to compress the piezoelectric elements being independent of the means (9, 10, 11, 12) retaining the rotor (2, 3) elastically in contact against the stator (1).

2. Piezoelectric motor according to claim 1, characterized in that the linking arms (1c) have, at least in their middle region, a width smaller than their thickness so as to be able to transmit a stress applied to the hub (1b) to the peripheral annulus (1a) and allow the propagation of a traveling wave in the peripheral annulus (1a).

3. Piezoelectric motor according to claim 2, characterized in that said arms (30c) are formed by the material remaining between circular holes (31) distributed circularly over a disk.

4. Piezoelectric motor according to anyone of the claims 1 to 3 characterized in that a hollow tube (8) passes axially through the hub (1b), that the pressure means (7) allowing the application of an axial pressure to the hub (1b) in the direction of the rods (5) consist of a removable element (7) solid with this tube (8) and bearing on the hub (1b) and in that the rotor (2, 3) is keyed onto a shaft (4) passing axially through the tube (8) and rotationally free with respect to this tube (8), the means (9, 10, 11, 12) which retain the rotor elastically against the stator (1) consisting of a removable element (9, 10) solid with the shaft (4) and bearing on an elastic element (11, 12) which transmits the pressure to the rotor (2, 3).

5. Piezoelectric motor according to claim 4, characterized in that the removable elements (7, 9, 10) are nuts screwed respectively onto the tube (8) and onto the shaft of the rotor (4).
